# EUROPEAN PATENT SPECIFICATION

(11) **EP 3 634 616 B1**
(45) Date of publication and mention of the grant of the patent: **22.06.2022**
(21) Application number: 18730461.3
(22) Date of filing: 20.04.2018
(51) Int. Cl.: B01J 8/08, C10G 3/00

(54) **METHOD OF PREPARATION OF HYDROCARBON FUELS FROM POLYOLEFIN WASTE MATERIALS**
VERFAHREN ZUR HERSTELLUNG VON KOHLENWASSERSTOFFKRAFTSTOFFEN AUS POLYOLEFINABFÄLLEN
PROCÉDÉ DE PRÉPARATION DE COMBUSTIBLES HYDROCARBONÉS À PARTIR DE DÉCHETS DE POLYOLÉFINE

(30) Priority: 03.05.2017 PL 42146717
(43) Date of publication of application: 15.04.2020
(73) Proprietor: Handerek Technologies Sp. z o.o., 03-301 Warszawa (PL)
(72) Inventor: HANDEREK, Adam, PL-43-300 Bielsko-Biala (PL); KOWALCZYK, Maciej Pawel, PL-05-300 Minsk-Mazowiecki (PL); KIRAGA, Jan, PL-05-300 Minsk-Mazowiecki (PL); BIERNAT, Krzysztof, PL-01-493 Warszawa (PL); MATUSZEWSKA, Anna, PL-05-140 Serock (PL)
(74) Representative: Piotrowicz, Alicja
(86) International application number: PCT/PL2018/000040
(87) International publication number: WO 2018/203763

(56) References cited:
- WO-A1-2004/037906
- JP-A- H0 559 372
- DATABASE WPI Week 200973 Thomson Scientific, London, GB; AN 2009-Q20520 XP002782963, & JP 2009 242485 A (ADCHEMCO CORP) 22 October 2009 (2009-10-22)

## Description

This invention relates to a method for producing of hydrocarbon fuels with a reduced content of unsaturated compounds, from polyolefin waste materials using feedstock recycling.

Waste plastics mainly include thermoplastic materials, while more than 10% of communal waste are polyolefins, such as polyethylene (PE), polypropylene (PP) and polystyrene (PS), due to their application on a mass scale in the production of packages, i.e. the main source of polymer waste.

Known methods of treatment of polyolefin waste materials include, among others, feedstock recycling, material recycling and energy recycling.

Energy recycling is based on the combustion of waste plastics and collecting the energy produced in the process. However, even though polyolefins have high calorific values, combustion of plastics releases environmentally hazardous substances, such as chlorine, sulphur or nitrogen compounds.

In turn, it is not possible to use material recycling, which consist in plastics regranulation and reprocessing, in the case of some waste materials, such as composite or metallised materials, due to high cost or lack of possibility of purification of waste.

Therefore, feedstock recycling, which consist in depolymerisation of polymer chains in order to produce hydrocarbons of lower molecular weight that can be used in various processes, for example, as fuel ingredients or as substrates in a variety of industrial processes, plays such an important role in the disposal of waste thermoplastics, including polyolefins.

Nevertheless, methods of depolymerisation of waste plastics involve difficulties with their implementation. For example, some physicochemical properties of plastics cause a number of technical problems that make difficult their depolymerisation process. Availability of solid plastics requires their liquification at the initial stage of the process. However, low thermal conductivity factor of most plastics, their high heat capacity and high activation energy of depolymerisation prevents heat from being uniformly distributed in the total volume of the waste. For these reasons, during the heating the mass of plastics locally overheats leading to the production of large amounts of coke, a by-product of depolymerisation reaction. Moreover, high viscosity of liquified plastics, even at relatively high temperatures, makes their mixing difficult, additionally rendering it impossible to generate the uniform temperature distribution in the plastics during the depolymerisation. Exceeding a temperature of 450°C, in the case of most thermoplastics, it results in coking of heating surfaces of a reaction chamber, what also obstructs the flow of heat to the material, and thereby an increase of the heat source temperature is required. Decoking of the reaction space requires the process to be stopped and then resumed, what negatively influences the general efficiency and increases the cost of the process.

Therefore, depolymerisation of waste plastics is usually carried out with the use of catalysts, which decrease activation energy of depolymerisation reaction and make it possible to control molecular weight of products. By decreasing the temperature of depolymerisation, and as a result of a catalyst activity, the amount of coke in the products is reduced, thereby improving the temperature efficiency of the process.

There are known depolymerisation processes that are carried out in an inert gas atmosphere including nitrogen or noble gases such as argon or helium.

In the patent literature there are described various methods of thermal depolymerisation of waste plastics.

The description of the Polish patent application P.408583 discloses a method of thermal decomposition of waste plastics and biomass, wherein waste plastics and biomass are subjected to catalytic depolymerisation in the presence of zeolite catalysts, in higher temperature conditions, from 450 to 550°C. The depolymerisation is carried out in a tower flow reactor packed with Pall rings, in a continuous way, in a process in which the packing and reactants in the form of crushed plastic material mixed with a catalyst are fed into the reactor, and the blend is heated in the reactor during a predefined period of time. When subjected to the high temperature, the plastics in the reaction chamber first undergo plasticisation and then thermal decomposition to compounds of lower molecular weight. Gaseous products are removed through a top outlet of the reaction chamber while a char deposit on the Pall rings is removed through a bottom outlet of the reaction chamber. Then, the gaseous products consisting of a mixture of hydrocarbons can be separated into fractions using distillation: a benzine fraction with a boiling point of up to 180°C, and an oil fraction with a boiling point of up to 360°C. The advantage of this process is a relatively high yield of the depolymerisation process, while its disadvantages include uneven distribution of the plasticised material on the Pall rings and a high content of the depolymerisation product with unsaturated bonds.

Another important problem with depolymerisation of waste plastics concerns a high fraction of unsaturated compounds in depolymerisation products, which limits their usefulness as ingredients of liquid hydrocarbon fuels. These problems can be overcome by catalytic hydrogenation of the depolymerisation products, simply known as hydrogenation.

For example, the Polish patent description PL210518 discloses a two-step method for hydrogenation of the hydrocarbon fraction from polymer waste processing, wherein, in the first step, methanol is reduced to carbon monoxide and hydrogen in an inert gas atmosphere, at a temperature from 100 to 300°C, in the presence of a catalyst: metal oxide selected from the group of: CoO, NiO, CuO and ZnO, deposited on a carrier selected from the group of: SiO₂, Al₂O₃, TiO₂ and ZrO₂. Next, in the second step, unsaturated fractions produced in polyolefin decomposition and with a boiling point below 360°C are subjected to hydrogenation with the use of a mixture of carbon monoxide and hydrogen, at a temperature from 100 to 400°C, in the presence of metal catalyst selected from the group of: Pt, Rh, Co/Mo, Mo, W and Fe, on an oxide carrier selected from the group of: SiO₂, Al₂O₃, TiO₂, MgO and ZrO₂. The products obtained in this process can be used as components of liquid fuels.

WO2004/037906 discloses a method of production providing high value products: kerosene, including cosmetic kerosene, white oils, high value paraffin and purified liquid fuels from polyolefin waste material and polyolefins. According to the above-mentioned publication, the product of the thermocatalytic decomposition of polyolefin waste material which is obtained in a vapour form is subjected to a fractionating condensation or full condensation followed by fractionating distillation and then subjected to catalytic hydrogenation to remove unsaturated double bonds and hydrogenation of aromatic hydrocarbons which are eventually present in the product. In the next step, the prepared fractions undergo further treatment by means of distillation in order to obtain fractions corresponding with the boiling temperature limits of the following high purity final products: a gasoline fraction, cosmetic kerosene, a white oil fraction - that can be eventually separated into narrower fractions having physicochemical properties characteristic for different grades of white oil, as well as a paraffin fraction used as a raw material for preparation of cosmetic paraffin and other high quality paraffin grades. Partial condensation and re-circulation of the vaporised decomposition product to the thermocatalytic reactor is advantageous in order to increase the content of low boiling hydrocarbons corresponding with kerosene and white oil fractions in the product of the thermocatalytic decomposition.

The Japanese patent application JPH0559372A discloses polyolefin resin such as waste cross-linked polyethylene material that is pyrolyzed at a temperature within the range of 300-550°C and the produced oily or vaporous product, together with gaseous nitrogen, etc., supplied from a carrier gas feeding part, is fed from the feeding part to a catalyst layer reaction part of a catalytic reforming reactor filled with rare earth ion-exchanging Y type zeolite, etc., and subjected to complete ion exchange with a rare earth element mixture (e.g., 36% La, 28% Ce, 25% Na, and others), then heated at 200-600°C with an electric heater and subjected to catalytic converting reaction. The resultant product is subsequently cooled to 0°C with an ice-cooled condenser and then cooled to - 80°C with a dry ice condenser to separate the gaseous nitrogen and lower hydrocarbons. According to the disclosed method, high-octane fuel oil is obtained.

Furthermore, the Japanese patent application JP2009242485A discloses a method for producing light oil from waste plastic. According to the publication, the method for producing light oil from waste plastics includes a process of crushing the waste plastics to prepare a slurry, a process of preliminary heating the waste plastics slurry, and a two-step reaction process under a high temperature and high pressure of hydrogen atmosphere, wherein the two-step reaction process includes a mainly thermolytic reaction process of obtaining light oil from the waste plastics having high reactivities such as polystyrene, polypropylene, etc., under the hydrogen atmosphere, and a mainly hydrogenation process of obtaining light oil from the waste plastics having low reactivities such as polyethylene, polyvinyl chloride, etc., under the hydrogen atmosphere and at a higher temperature than that of the mainly thermolytic reaction process.

From the prior art as cited above, there is known the continuous depolymerisation process in a tower flow reactor with a movable packing, which comprises a heating system for the reaction chamber, wherein the products of the depolymerisation are collected in a gaseous state, and wherein the obtained products of the depolymerisation are subjected to catalytic hydrogenation and isomerisation in an atmosphere of synthesis gas under atmospheric pressure.

Simultaneously, it results from the publications discussed above that the technology of polyolefins feedstock recycling is constantly modified in order to improve the quality of fuels obtained through depolymerisation, in particular by reducing the content of unsaturated compounds in the depolymerisation product, as their presence in fuel, especially in benzine or oil fraction, can lead to accelerated aging of the fuel and to precipitation of deposits.

It would be advisable to further improve the process of the manufacturing of hydrocarbon fuels from polyolefin waste materials such as PE, or PP in a process that includes thermal depolymerisation of such materials.

The subject-matter of the invention is a method of producing hydrocarbon fuels from polyolefin waste materials, wherein: polyolefin waste materials are subjected to continuous depolymerisation in a tower flow reactor with a movable packing, which comprises a heating system for heating the lower half of the reaction chamber, where products of the depolymerisation are collected in a gaseous state through an outlet in the upper half of the reaction chamber; and the collected products of the depolymerisation are subjected to catalytic hydrogenation and isomerisation in an atmosphere of synthesis gas under atmospheric pressure, to obtain a mixture of hydrocarbon fuels. It is characteristic for the method that polyolefin waste materials are mixed with heated elements constituting the tower reactor packing until the surface of the packing elements is coated with a thin layer of plasticised material, wherein in the depolymerisation process, the obtained mixture is fed as a stream into the reaction chamber from the top of the chamber, whereas a synthesis gas is fed in a counter-current from the bottom, and whereas the gas contains carbon monoxide (CO) and hydrogen (H₂), with the CO:H₂ molar ratio from 0.25 to 1.5 : from 0.5 to 3.

The depolymerisation is carried out under atmospheric pressure.

Preferably, the packing of the reaction chamber is selected from the group of Raschig rings, Pall rings, and Bialecki rings.

Preferably, the polyolefin waste materials are mixed with the reactor packing in an amount not exceeding 1 kg of the material per 1 m² of the specific surface area of the packing.

Preferably, the mixture of the reactor packing and plasticised material is fed into the reaction chamber at a temperature from 240 to 260°C, preferably 250°C.

Preferably, the depolymerisation is carried out maintaining a temperature gradient, wherein the lower half of the reaction chamber is heated using a heating system to a temperature in the range of 400 to 440°C, while near the outlet for the depolymerisation products, the temperature is maintained in the range of 200 to 360°C.

Preferably, the depolymerisation is used for polyolefin materials selected from the group of polyethylene, and polypropylene.

Preferably, the process of the hydrogenation and isomerisation is fed with depolymerisation products in a gaseous state having a temperature in the range of 320 to 360°C.

Preferably, the hydrogenation is carried out in the presence of at least one metal catalyst selected from the group of platinum and palladium, deposited on an oxide carrier selected from the group of Al₂O₃ and P₂O₅.

The hydrogenation and isomerisation are carried out in an atmosphere of synthesis gas containing carbon monoxide and hydrogen, and with the CO:H₂ weight ratio from 0.25 to 1.5 : from 0.5 to 3.

Preferably, the hydrogenation and isomerisation products are subjected to a fractional distillation with a separation into a low-boiling fraction (C1-C4), a benzine fraction, and an oil fraction.

Preferably, the low-boiling fraction is used to produce synthesis gas for depolymerisation and hydrogenation.

The subject-matter of the invention is presented in an exemplary embodiment in a drawing, where:
Fig. 1 presents a block diagram of the process of the manufacturing of liquid fuels from waste plastics,
Fig. 2 presents a schematic cross-sectional view of the reactor for the depolymerisation of waste plastics.

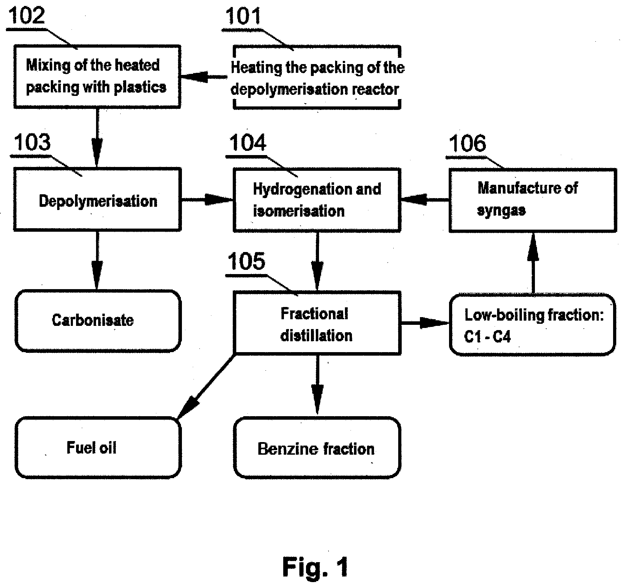

As it is presented in Fig. 1, the method of the manufacturing of liquid fuels from waste plastics according to the invention includes: heating the packing of the depolymerisation reactor in step 101, mixing the waste plastics with the packing in step 102, feeding the obtained mixture into the reactor and depolymerising the waste plastics in step 103, hydrogenating and isomerising of the depolymerisation products in step 104, and a fractional distillation of the hydrocarbon mixture in step 105.

Before the beginning of the process, waste polyolefins: polyethylene (PE) and polypropylene (PP) are cleansed and ground and then rinsed with nitrogen, in order to limit the amount of oxygen fed into the reactor with the air trapped in the spaces among fragments of the ground waste. Apart from the preparation of the raw material (waste polyolefins), the packing of the reactor is prepared, and then heated in step 101 to a temperature from 430 and 470°C, preferably 450°C. The reactor can be packed with any known elements that are used as structured packing of distillation columns, for example Raschig rings, Pall rings, and Bialecki rings.

Heated elements of the packing are then mixed in step 102 with the cleansed and crushed polyolefin waste for a time period necessary for plasticisation and formation of the uniform thin layer of the plastic on the surface of the packing elements, with thickness preferably from 0.3 to 2 mm. In order to obtain the suitable thin plastic layer, the weight of the plastic per each 1 m² of the specific surface area of the packing elements should not exceed 1 kg, preferably not more than 0.5 kg.

In order to obtain the suitably thin layer of the plastic on the surface of the packing elements, the plastic can be gradually fed into the chamber filled with the packing elements heated to an appropriate temperature, in such proportions as to maintain constant plasticity of the raw material on the surface of the packing elements.

Once the raw material is thoroughly mixed with the packing, the average temperature of the mixture should range from 240 to 260°C, preferably 250°C, which is a result of heat that is transferred from the packing elements to the plastic.

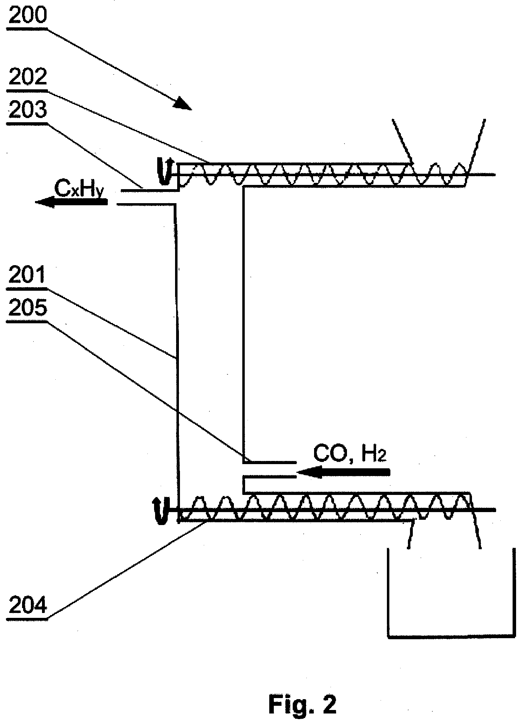

Next, the packing coated with the uniform layer of the plastic having a temperature of about 250°C, which exceeds flow temperature of the polyolefins, is fed into the chamber of a depolymerisation reactor 200, which cross-section is presented schematically in Fig. 2. The reactor 200 can be constructed and dimensioned as similar to the depolymerisation reactor described in the Polish patent application P.408583. The depolymerisation reactor 200 is a tower reactor and it comprises a reaction chamber in the form of a vertical pipe 201, with an inlet 202 for raw material and packing and an outlet 203 for gaseous products of depolymerisation located within an upper portion of the chamber, and an outlet 204 for the packing located in a lower portion of the chamber. Preferably, the raw material and packing inlet 202 and the packing outlet 204 are equipped with coreless screw conveyors, what provides an adjustment of the flow of the packing through the reaction chamber and therefore it provides control over the dwell time of the reagents inside the chamber. The reaction chamber 201 preferably has a diameter smaller than its height, and preferably it has a diameter to height proportion of 1:6, which provides the optimal temperature distribution of during the depolymerisation process.

The depolymerisation reactor 200 presented in Fig. 2, unlike the reactor according to the Polish patent application P.408583, is further equipped with an inlet 205, located near the packing outlet 204, for a synthesis gas feeding into the reaction chamber in a counter-current with respect to the direction in which the packing elements move during the depolymerisation process.

The depolymerisation reactor 200 is further equipped with a heating system (for the clarity, not presented in the drawing) in the form of a heating jacket located in the lower portion of the reaction chamber 201 and extending to the mid-height of the chamber 201. Preferably, the heating system of the reactor is supplied with liquid metal alloy, preferably tin alloy, as a heating agent, which additionally provides the uniform temperature distribution of in the selected areas of the reaction chamber and allows obtaining a suitable temperature gradient inside the chamber. In the depolymerisation process, the temperature measured in the lower half of the reaction chamber should range from 400 to 470°C, more preferably 400 to 440°C, most preferably 420°C, whereas in the upper (not heated) half of the reaction chamber 201, the temperature is gradually decreased, so that in the top point of the chamber 201, namely near the outlet 204 for depolymerisation products, the temperature measured inside the chamber should range from 200 to 360°C. The temperature gradient inside the reaction chamber, between the lowest and the top point of the chamber, can reach up to 270°C. Such a temperature gradient inside the reaction chamber is obtained when the reactor heating system does not exceed 500°C.

In the depolymerisation process, in step 103, the raw material is fed into the reaction chamber, together with the packing elements, in a plasticised state - creating a thin, even layer of the plastic on the surface of the packing elements, at a temperature preferably about 250°C. In the reaction chamber, the raw material is gravitationally transported towards the lower outlet 204, where it undergoes further heating and depolymerisation in an atmosphere of the synthesis gas which is fed into the reaction chamber 202 in a counter-current through the inlet 205. The synthesis gas used in the depolymerisation process, contains hydrogen, carbon monoxide, and optionally, an addition of nitrogen as an inert gas, to dilute the components of the synthesis gas. The molar ratio of the components of the used synthesis gas CO : H₂ : N₂ ranges from 0.25 to 1.5 : from 0.5 to 3 : from 0 to 1. Most preferably, the CO : H₂ molar ratio in the synthesis gas is 1:2. The synthesis gas is fed into the reaction chamber as a stream in an amount of 50 to 500 litres of the synthesis gas per 1 kg of the raw material.

In the depolymerisation process, as the result of a high temperature, in an inert gas atmosphere, long polymer chains break apart, and in a gaseous state, are transported towards the outlet 203. The used synthesis gas works therefore as a hydrogen donor and as a carrier facilitating the transport of the hydrocarbons in a gaseous state towards the upper portion of the reactor 200. Additionally, it turns out that the presence of carbon monoxide in the synthesis gas improves the productivity of the depolymerisation process.

In the upper parts of the reactor, due to the temperature gradient inside the reaction chamber, hydrocarbons with a boiling point above 360°C condensate on the reactor packing elements coated with a thin plastic layer, thereby supplying the stream of the raw material newly fed into the reaction chamber 201, what decreases the activation temperature of the depolymerisation. The condensed hydrocarbons, together with the packing, are gravitationally transported towards the lower parts of the reactor, where they are subjected to further depolymerisation due to the high temperature of the process. The processes of the depolymerisation in the lower parts of the reactor 200, where the temperature inside the reaction chamber reaches about 420°C, as well as the further process of the condensation supplied with the condensate of the stream of "a fresh" raw material, can be repeated in the reactor 200 periodically, until the depolymerisation products with a boiling point below 360°C are obtained, preferably with a boiling point ranging between 200 and 360°C. The depolymerisation products with a specific boiling point are discharged from the reaction chamber 201 through the outlet 203.

During the process, as a by-product, some char deposits on the packing elements, and due to the conditions of the process, the deposit takes the form of dust, which can be mechanically separated from the packing elements, thereby the packing can be used many times in the depolymerisation process. The process of the packing decharring can be carried out, for example, by the use of char sifting. Therefore, the process carried out in a such way provides reduced production downtimes, allowing to remove the char from the packing elements outside the area of the reaction chamber 201.

The as-obtained depolymerisation products in a gaseous state are subjected to hydrogenation and isomerisation in step 104. The processes of the hydrogenation and isomerisation can be carried out analogously to the description of the patent PL210518: using a metal catalyst such as platinum and/or palladium deposited on an oxide carrier, for example, Al₂O₃ or P₂O₅, at a temperature in the range of 320 to 360°C, in the presence of a synthesis gas which comprises CO and H₂ with the CO:H₂ molar ratio from 0.25 to 1.5 : from 0.5 to 3, and preferably with the CO:H₂ molar ratio of 1:2. However, unlike the hydrogenation process described in the patent PL210518, the synthesis gas used in the present process is not produced from methanol but from C1-C4 hydrocarbons that are preferably obtained in the process of the polyolefins depolymerisation . Moreover, unlike the solution known from the description of patent PL210518, according to the present invention, the processes of the hydrogenation and isomerisation uses hydrocarbons in a gaseous state at a temperature from 320 to 360°C. The pipe for transporting the depolymerisation products to the hydrogenation and isomerisation reactor is equipped with a heating system and a temperature control system providing an appropriate temperature of the depolymerisate at the inlet of the hydrogenation and isomerisation reactor.

As a result of the hydrogenation and isomerisation, a mixture of saturated hydrocarbons is obtained, which is then subjected, in step 105, to fractional distillation in order to obtain a low-boiling fraction (C1-C4), a benzine fraction, and an oil fraction. The distillation process can be carried out, for example, with the use of a conventional distillation column.

The obtained C1-C4 fraction can be used to produce synthesis gas 106 (Fig. 2), which is used for polyolefins depolymerisation and for the subsequent hydrogenation and isomerisation processes, as well as to fuel the burners of the hydrogenation and isomerisation reactor or the power generator, for example, in the form of a steam turbine.

The employed isomerisation process makes it possible to obtain branched products, resulting in an increased octane number of the produced hydrocarbon fuels.

In the process according to the present invention, both the polyolefins depolymerisation and the hydrogenation and isomerisation processes are carried out under atmospheric pressure, providing reduced installation and processing costs. For this reason, the process is economically profitable regardless of whether a large or a small volume of waste plastics is processed annually, in contrast to pressure technologies, which require considerably large volumes of raw materials to be processed annually in order to render the process economically profitable.

Thanks to the employed depolymerisation technology, it is feasible to carry out depolymerisation and hydrogenation under atmospheric pressure, wherein a hydrogen donor is a mixture of carbon monoxide and hydrogen (synthesis gas) at an appropriate ratio, with the volume of the synthesis gas stream fed into the reaction chamber is maintained in the range of 50 to 500 litres of synthesis gas per 1 kg of raw material.

It turned out that the presence of carbon monoxide in the process improves the efficiency of both depolymerisation and hydrogenation. The depolymerisation process carried out in the atmosphere of synthesis gas is operated under atmospheric pressure, without the addition of catalysts which, due to the necessity of their regeneration, could increase production costs and generate environmentally hazardous waste.

Moreover, employing a solution that involves pre-mixing of the crushed material with the heated packing allows for the formation of a thin uniform layer of plasticised polymer on the surface of the packing elements, thereby the material is heated more uniformly, what limits local overheating of the raw material during depolymerisation, and results in a decreased activation temperature of the reaction of carbon-carbon bonds breaking in polyolefin chains.

The present process also enables the production of saturated hydrocarbon products, including a low-boiling fraction C1-C4, a benzine fraction, and an oil fraction, of characteristic high purity - with a decreased amount of double bonds in the products, what is particularly difficult to obtain in the case of waste materials due to the presence of impurities in such materials, and other sorts of additives.

A satisfactory decrease of the content of unsaturated compounds in the produced hydrocarbon fractions is particularly crucial when depolymerisation products are used as fuels; due to relatively high reactivity of double and triple bonds, which undergo polymerisation and oxidation processes, which promote accelerated fuel aging and precipitation of solid impurities.

## Claims

1. A method of producing hydrocarbon fuels from polyolefin waste materials, wherein:
- polyolefin waste materials are subjected to continuous depolymerisation in a tower flow reactor with a movable packing, which comprises a heating system for heating the lower half of a reaction chamber, where products of the depolymerisation are collected in a gaseous state through an outlet in the upper half of the reaction chamber;
- and the obtained products of the depolymerisation are subjected to catalytic hydrogenation and isomerisation in an atmosphere of synthesis gas, under atmospheric pressure, resulting in a mixture of hydrocarbon fuels;
**characterised in that:**
- the cleansed, rinsed with nitrogen and ground polyolefin waste materials are mixed with heated elements constituting the packing of the reactor, for a time period necessary for plasticisation, and until the surface of the packing elements is coated with a thin layer of plasticised material, wherein the average temperature of the mixture is within the range of 240 to 260°C, and wherein in the depolymerisation process, which is carried out under atmospheric pressure, the obtained mixture is fed as a stream into the reaction chamber from the top of the chamber, whereas a synthesis gas is fed in a counter-current from the bottom, the gas comprises carbon monoxide (CO) and hydrogen (H₂), with the CO:H₂ molar ratio from 0.25 to 1.5 : from 0.5 to 3, wherein in the depolymerisation process, the temperature of the lower half of the reaction chamber ranges from 400 to 440°C, while the temperature near the outlet for depolymerisation products is maintained in the range from 200 to 360°C.

2. A method according to claim 1, **characterised in that** the packing of the reaction chamber is selected from the group of Raschig rings, Pall rings, and Bialecki rings.

3. A method according to any of claims from 1 to 2, **characterised in that** the polyolefin waste materials are mixed with the reactor packing in an amount not exceeding 1 kg of the material per 1 m² of the specific surface area of the packing.

4. A method according to claims from 1 to 3, **characterised in that** the mixture of the reactor packing and plasticised material is fed into the reaction chamber preferably at a temperature of 250°C.

5. A method according to any of claims from 1 to 4, **characterised in that** polyolefin materials subjected to depolymerisation are selected from the group consisting of polyethylene and polypropylene.

6. A method according to any of claims from 1 to 5, **characterised in that** the depolymerization products are provided in a gaseous state having a temperature in the range of 320 to 360°C for the hydrogenation and isomerization process.

7. A method according to any of claims from 1 to 6, **characterised in that** the hydrogenation is carried out in the presence of at least one metal catalyst selected from the group consisting of platinum and palladium deposited on an oxide carrier selected from the group of Al₂O₃ and P₂O₅.

8. A method according to any of claims from 1 to 7, **characterised in that** the hydrogenation and isomerisation products are subjected to fractional distillation with separation into a low-boiling fraction (C1-C4), a benzine fraction, and an oil fraction.

9. A method according to claim 8, **characterised in that** the low-boiling fraction is used to produce synthesis gas for depolymerisation and hydrogenation.

## Patentansprüche

1. Verfahren zur Herstellung von Kohlenwasserstoffbrennstoffen aus Polyolefin-Abfallmaterialien, wobei:
- Polyolefin-Abfallmaterialien einer in einem mit beweglicher Packung ausgestattet und ein Heizsystem zum Beheizen der unteren Hälfte der Reaktionskammer umfassend Turmströmungsreaktor kontinuierlichen Depolymerisation unterzogen werden, wobei Depolymerisationsprodukte in gasförmigem Zustand durch einen Auslass in der oberen Hälfte der Reaktionskammer gesammelt werden;
- und die erhaltenen Produkte der Depolymerisation in einer Atmosphäre aus Synthesegas, unter atmosphärischem Druck einer katalytischen Hydrierung und Isomerisierung unterzogen werden, was zu einer Mischung aus Kohlenwasserstoffbrennstoffen führt;
**dadurch gekennzeichnet, dass:**
- die gereinigten, mit Stickstoff gespült und zerkleinerten Polyolefin-Abfallmaterialien für eine Zeit notwendig für Plastifizierung und bis die Oberfläche der Packungselemente mit einer dünnen Schicht aus plastifiziertem Material beschichtet ist mit die Packung des Reaktors bildend erhitzten Elementen gemischt werden, wobei die Durchschnittstemperatur der Mischung im Bereich von 240 bis 260°C liegt, und wobei die bei der im unter der Atmosphärendruck durchgeführter Depolymerisationsprozess erhaltene Mischung aus oben der Kammer als Strom in die Reaktionskammer zugeführt wird, während im Gegenstrom von unten ein Synthesegas das Kohlenmonoxid (CO) und Wasserstoff (H₂) mit das Molverhältnis CO:H₂ 0,25 bis 1,5 : 0,5 bis 3 enthält zugeführt wird, wobei im Depolymerisationsprozess, die Temperatur der unteren Hälfte der Reaktionskammer von 400 bis 440°C reicht, während die Temperatur in der Nähe des Auslasses für Depolymerisationsprodukte im Bereich von 200 bis 360°C gehalten wird.

2. Verfahren nach Anspruch 1, **dadurch gekennzeichnet, dass** die Packung der Reaktionskammer aus der Gruppe von Raschig-Ringe, Pall-Ringe, und Bia 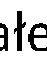 ecki-Ringe ausgewählt wird.

3. Verfahren nach einem der Ansprüche 1 bis 2, **dadurch gekennzeichnet, dass** die Polyolefin-Abfallmaterialien mit der Reaktorpackung in einer Menge von nicht mehr als 1 kg des Materials pro 1 m² der spezifischen Oberfläche der Packung vermischt werden.

4. Verfahren nach den Ansprüchen 1 bis 3, **dadurch gekennzeichnet, dass** die Mischung der Reaktorpackung und dem plastifizierten Material in die Reaktionskammer bei einer Temperatur von vorzugsweise 250°C zugeführt wird.

5. Verfahren nach einem der Ansprüche 1 bis 4, **dadurch gekennzeichnet, dass** der Depolymerisation unterzogene Polyolefinmaterialien aus der Gruppe bestehend aus Polyethylen und Polypropylen ausgewählt werden.

6. Verfahren nach einem der Ansprüche 1 bis 5, **dadurch gekennzeichnet, dass** die Depolymerisationsprodukte in gasförmigem Zustand bei einer Temperatur im Bereich von 320 bis 360°C zum Hydrierungs- und Isomerisierungsprozess zugeführt werden.

7. Verfahren nach einem der Ansprüche 1 bis 6, **dadurch gekennzeichnet, dass** die Hydrierung in Gegenwart mindestens eines metallischen Katalysators durchgeführt wird, der aus der Gruppe bestehend aus Platin und Palladium ausgewählt wird, das auf einem Oxidträger abgeschieden ist, der aus der Gruppe von Al₂O₃ und P₂O₅ ausgewählt wird.

8. Verfahren nach einem der Ansprüche 1 bis 7, **dadurch gekennzeichnet, dass** die Hydrierungs- und Isomerisierungsprodukte einer mit Trennung in eine niedrigsiedende Fraktion (C1-C4), eine Benzinfraktion, und eine Ölfraktion fraktionierten Destillation unterzogen werden.

9. Verfahren nach Anspruch 8, **dadurch gekennzeichnet, dass** zur Herstellung von Synthesegas zur Depolymerisation und Hydrierung die niedrigsiedende Fraktion verwendet wird.

## Revendications

1. Procédé de production de carburants hydrocarbonés à partir de déchets de polyoléfines, dans lequel :
- les déchets de polyoléfines sont soumis à une dépolymérisation continue dans un réacteur à flux tour avec un garnissage mobile, qui comprend un système de chauffage pour chauffer la moitié inférieure d'une chambre de réaction, où les produits de la dépolymérisation sont collectés à l'état gazeux par une sortie dans la moitié supérieure de la chambre de réaction ;
- et les produits obtenus de la dépolymérisation sont soumis à une hydrogénation et une isomérisation catalytiques dans une atmosphère de gaz de synthèse, sous pression atmosphérique, ce qui donne un mélange de combustibles hydrocarbonés ;
**caractérisé en ce que:**
- les déchets de polyoléfines nettoyés, rincés à l'azote et broyés sont mélangés avec des éléments chauffés constituant le garnissage du réacteur, pendant une période de temps nécessaire à la plastification, et jusqu'à ce que la surface des éléments de garnissage soit revêtue d'une fine couche de matière plastifiée, dans lequel la température moyenne du mélange est comprise entre 240 et 260°C, et dans lequel, dans le procédé de dépolymérisation, qui est effectué sous pression atmosphérique, le mélange obtenu est introduit sous forme de courant dans la chambre de réaction par le haut de la chambre, tandis qu'un gaz de synthèse est introduit à contre-courant par le bas, le gaz comprend du monoxyde de carbone (CO) et de l'hydrogène (H2), avec le rapport molaire CO:H2 de 0.25 à 1.5 : de 0.5 à 3, dans lequel, dans le procédé de dépolymérisation, la température de la moitié inférieure de la chambre de réaction est comprise entre 400 et 440°C, tandis que la température près de la sortie des produits de dépolymérisation est maintenue dans la gamme de 200 à 360°C.

2. Procédé selon la revendication 1, **caractérisé en ce que** le garnissage de la chambre de réaction est choisi dans le groupe des anneaux de Raschig, des anneaux Pall et des anneaux Bialecki.

3. Procédé selon l'une quelconque des revendications 1 à 2, **caractérisé en ce que** les déchets de polyoléfine sont mélangés au garnissage du réacteur en une quantité n'excédant pas 1 kg de matériau pour 1 m² de surface spécifique du garnissage.

4. Procédé selon les revendications 1 à 3, **caractérisé en ce que** le mélange du garnissage du réacteur et de la matière plastifiée est introduit dans la chambre de réaction, de préférence à une température de 250°C.

5. Procédé selon l'une quelconque des revendications 1 à 4, **caractérisé en ce que** les matériaux polyoléfines soumis à la dépolymérisation sont choisis dans le groupe constitué par le polyéthylène et le polypropylène.

6. Procédé selon l'une quelconque des revendications 1 à 5, **caractérisé en ce que** les produits de dépolymérisation sont fournis dans un état gazeux ayant une température dans la gamme de 320 à 360°C pour le procédé d'hydrogénation et d'isomérisation.

7. Procédé selon l'une quelconque des revendications 1 à 6, **caractérisé en ce que** l'hydrogénation est réalisée en présence d'au moins un catalyseur métallique choisi dans le groupe constitué par le platine et le palladium déposé sur un support d'oxyde choisi dans le groupe de Al₂O₃ et P₂O₅.

8. Procédé selon l'une quelconque des revendications 1 à 7, **caractérisé en ce que** les produits d'hydrogénation et d'isomérisation sont soumis à une distillation fractionnée avec une séparation en une fraction à bas point d'ébullition (C1-C4), une fraction de benzine, et une fraction d'huile.

9. Procédé selon la revendication 8, **caractérisé en ce que** la fraction à bas point d'ébullition est utilisée pour produire du gaz de synthèse pour la dépolymérisation et l'hydrogénation.
